# EUROPÄISCHE PATENTSCHRIFT

(11) **EP 4 089 975 B1**
(45) Veröffentlichungstag und Bekanntmachung des Hinweises auf die Patenterteilung: **23.07.2025**
(21) Anmeldenummer: 21173642.6
(22) Anmeldetag: 12.05.2021
(51) Int. Cl.: H04L 9/40

(54) **GESICHERTER ZUGRIFF AUF NETZWERKE**
SECURE ACCESS TO NETWORKS
ACCÈS SÉCURISÉ AUX RÉSEAUX

(43) Veröffentlichungstag der Anmeldung: 16.11.2022
(73) Patentinhaber: ise Individuelle Software und Elektronik GmbH, 26122 Oldenburg (DE)
(72) Erfinder: Sahm, Christoph, 26131 Oldenburg (DE)
(74) Vertreter: Angerhausen, Christoph

(56) Entgegenhaltungen:
- WO-A1-98/54644
- JP-A- 2009 182 710
- US-A1- 2006 039 365
- US-A1- 2014 059 216

## Beschreibung

### TECHNISCHES GEBIET

Die hier offenbarte Erfindung liegt auf dem Gebiet der Netzwerke, insbesondere zum Schutz vor unrechtmäßigem Zugriff von außerhalb eines Netzwerks oder von einem Gerät auf ein anderes Gerät des Netzwerks.

### HINTERGRUND

Zu den üblichen Kommunikationsmöglichkeiten in Computernetzwerken gehört der Aufbau von Verbindungen zwischen zwei Geräten, die nicht notwendigerweise direkt miteinander verbunden sind. Derartige Verbindungen werden als Peer-to-Peer-Verbindungen bezeichnet (P2P) und sind etwa von Server/Client-Modellen abzugrenzen, in denen beliebige Verbindungen zwischen Geräten nicht vorgesehen sind. Ein Anwendungsbeispiel für eine P2P-Verbindung ist der Aufbau einer solchen Verbindung von einem Gerät außerhalb des Netzwerks, beispielsweise um ein Gerät in dem Netzwerk zu warten. Jedoch können mit einer solchen Verbindung auch Unberechtigte auf das Gerät in dem Netzwerk zugreifen, wenn keine geeigneten Maßnahmen getroffen werden.

Bekannte Maßnahmen zur Absicherung von P2P-Verbindungen umfassen die Programmierung bestimmter Geräte, beispielsweise Router, in dem Netzwerk mit dem Ziel, sämtliche Pakete, die in dem Netzwerk erscheinen, zu stören, wenn es sich um Pakete einer P2P-Verbindung handelt. Solche Pakete können beispielsweise anhand ihres Headers identifiziert werden. Durch eine solche Störung kann der Inhalt oder die Adressierung des Pakets so geändert werden, dass dieses seinen Adressaten nicht mehr erreicht oder der Inhalt unlesbar wird. Gegebenenfalls kann auch auf eine Weiterleitung des Pakets verzichtet werden. Um legitime P2P-Verbindungen zu ermöglichen, muß die Störungsfunktionalität abgeschaltet werden.

WO 98/54644 A1 offenbart Sicherheitsmerkmale, die unter anderem Filtern und Zugriffskontrolle umfassen. Ferner ist offenbart, Pakete zu filtern, wobei Pakete oder Frames ignoriert oder transformiert werden. Außerdem ist die Verwendung von Routern offenbart. Eine Routing-Entscheidung wird getroffen unter Verwendung von Paketadressen. Filterfunktionen werden ausgeführt, um eine Zugriffsentscheidung zu treffen. Frames werden im Wege einer Transformation gekapselt oder einer Adressanpassung unterzogen. Die beschriebenen Maßnahmen betreffen auch Peer-to-Peer-Verbindungen.

US 2014/059216 A1 offenbart Identifizieren von zweiseitigen Verbindungen zwischen Geräten. Die Verbindungen werden durch P2P-Anwendungen zwischen Geräten innerhalb und außerhalb eines Netzwerks vorgenommen. P2P-Sitzungen können mit zuvor beobachteten P2P-Sitzungen abgeglichen werden. Wenn eine P2P-Verbindung nicht zulässig ist, kann eine Warnung ausgegeben werden.

US 2006/039365 A1 offenbart ein P2P-System zum Betrieb von P2P-Verbindungen, die im Rahmen einer Sitzung errichtet und wieder beendet werden.

### ZUSAMMENFASSUNG

Die Erfindung ist in den beigefügten Ansprüchen definiert.

### KURZE BESCHREIBUNG DER ZEICHNUNGEN

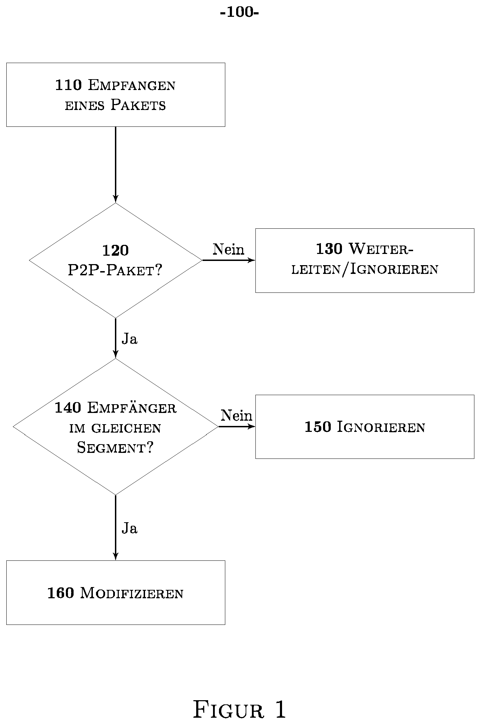

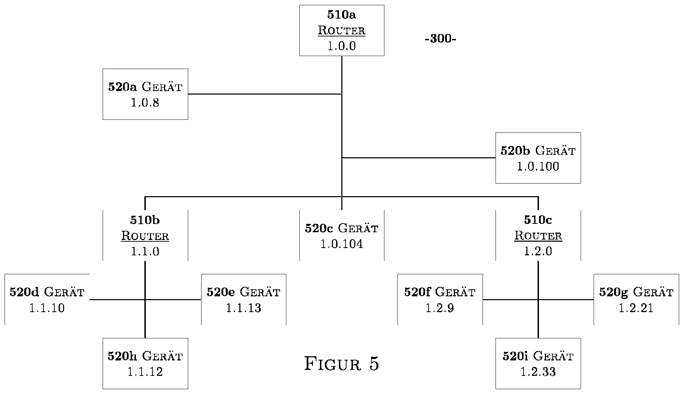

Die Figuren 1 bis 4 zeigen erfindungsgemäße Verfahren. Die Figur 5 zeigt ein Netzwerk zur Anwendung von Ausführungsformen der Erfindung.

### AUSFÜHRLICHE BESCHREIBUNG

Die Erfindung kann von Routern und anderen Geräten in einem Netzwerk ausgeführt werden. Beispiele für solche Netzwerke sind lokale IP-Netze (WLAN) oder KNX-Netze, wie sie etwa in der Gebäudeautomation verwendet werden. Der im folgenden verwendete Begriff Router entspricht in einem KNX-Netz einem Koppler. Die Erfindung ist unabhängig von der Topologie des Netzwerks; Beispiele für solche Topologien umfassen Stern-, Ring- und Bustopologien sowie beliebige unstrukturierte Topologien. Im folgenden werden Ausführungsformen anhand einer Baumtopologie erläutert; jedoch kann die Erfindung ohne weiteres auch auf die vorgenannten Topologien angewendet werden. Die Geräte in einem derartigen Netzwerk sind handelsübliche Computer, Laptops und Smartphones sowie insbesondere auch netzwerkfähige Geräte in der Gebäudeautomation, beispielsweise Sensoren, Schalter, Medienabspielgeräte etc. Die Geräte sind mittels Kabel- oder Funkverbindung in das Netzwerk eingebunden.

Die Geräte in dem Netzwerk umfassen sowohl gesicherte als auch ungesicherte Geräte. Ein gesichertes Gerät ist in der Lage, mit anderen Geräten über verschlüsselte Verbindungen in Kontakt zu treten, während ungesicherte Geräte im Klartext kommunizieren. Ein Ziel der Erfindung besteht darin, insbesondere die ungesicherten Geräte vor unzulässigen P2P-Verbindungen zu schützen.

Ausführungsformen der Erfindung umfassen Verfahren und Befehle, die in einem Netzwerk aus miteinander verbundenen Geräten und Routern ausgeführt werden können. Die Router dienen sowohl dem Zugriff von außerhalb des Netzwerks auf Geräte und weitere Router in dem Netzwerk als auch der Weiterleitung von Paketen aus einem Segment des Netzwerks in ein anderes Segment. Die Router erkennen, ob ein Paket zu einer P2P-Verbindung gehört, beispielsweise indem sie Headerinformationen aus dem Paket lesen oder indem sie Herkunft- und Zieladressen eines Pakets mit Adressen vergleichen, zwischen denen bereits zuvor eine P2P-Verbindung errichtet wurde und die von einem Router gespeichert wurde.

Wenn ein Router feststellt, dass ein Paket eine P2P-Verbindung verwendet, hindert er das Paket an seiner ordnungsgemäßen Zustellung. Beispielsweise kann er darauf verzichten, das Paket in ein Zielsegment des Netzwerks weiterzuleiten, so dass es keine Möglichkeit hat, seinen Empfänger zu erreichen; dies kann die Zustellung des Pakets unterbinden in Fällen, bei denen das Paket den Router passieren muss, um auf dem Weg vom Versender zum Empfänger von einem Segment in das nächste Segment des Netzwerks zu gelangen. Der Router modifiziert den Inhalt des Pakets so, dass es seinen Empfänger nicht mehr erreichen kann oder für den Empfänger unlesbar wird; diese Maßnahme ist beispielsweise geeignet, wenn das Segment, in dem sich das Paket befindet, auch den Empfänger enthält und eine Weiterleitung in ein Nachbarsegment ohnehin nicht vorgesehen ist. Das Modifizieren des Pakets umfasst Entwerten (scramble) des Paketinhalts (payload) und/oder Hervorrufen einer kurzzeitigen physikalischen Störung des Verbindungsmediums.

Zumindest einige der Router sind eingerichtet, gesicherte P2P-Verbindungen anzunehmen und zu verwalten. Eine gesicherte P2P-Verbindung ist beispielsweise eine verschlüsselte Verbindung oder eine Verbindung, die über einen Tunneling Server errichtet wird. Ein solcher Server kann beispielsweise als Schnittstelle eines Routers nach außen implementiert sein. Alternativ ist eine solche Verbindung über eine USB- oder Bluetooth-Schnittstelle eines Routers möglich. Die genannten Verbindungen können beispielsweise von einem externen Gerät aufgebaut werden, etwa um ein Gerät oder einen Router in dem Netzwerk zu warten. Bei KNX-Netzwerken werden solche Verbindungen von sogenannten Client-Tools aufgebaut. Die Pakete derartiger Verbindungen sollen, anders als die Pakete ungesicherter P2P-Verbindungen, ordnungsgemäß verarbeitet werden.

Der Router, der Pakete zum Aufbau einer gesicherten P2P-Verbindung erhält, speichert zunächst eine Adresse des Absenders dieser Verbindung. In bestimmten Ausführungsformen kann der Router die konkrete Absenderadresse, beispielsweise eine IP-Adresse speichern. Alternativ kann der Router dem Absender eines solchen Pakets eine Adresse zuordnen, die in dem Netzwerk eindeutig ist, und speichert diese. Erhält der Router im weiteren Verlauf Pakete aus dem Netzwerk, die an die gespeicherte Adresse adressiert sind, kann er diese der Verbindung zuordnen und an die externe Adresse weiterleiten. Insbesondere können die zugeordneten Adressen durch ihre Struktur das Segment angeben, in dem sich der Router befindet, so dass Antwortpakete aus anderen Segmenten des Netzwerks korrekt geroutet werden können. In Ausführungsformen ohne Zuordnen von Adressen können andere Router separat mit Routinginformationen versorgt werden.

Der Router informiert andere Router in dem Netzwerk über die Verbindung, beispielsweise mittels eines automatisch erzeugten Pakets, das die gespeicherte Adresse enthält und entweder an sämtliche Router in dem Netzwerk oder an eine Teilmenge dieser Router gesendet wird. Beispielsweise kann dieses Paket lediglich an diejenigen Router gesendet werden, die die Pakete der Verbindung auf ihrem Weg zu dem Zielgerät im Netzwerk passieren. Um diese Router zu informieren, kann das erzeugte Paket beispielsweise einfach an das Zielgerät gesendet werden; jeder der Router, die die das Paket auf diesem Weg passiert, kann aus dem Paket die gespeicherte Adresse entnehmen. Alternativ kann das Paket mittels Broadcasting an mehrere oder sämtliche Router versendet werden. Das Paket ist vorzugsweise verschlüsselt, beispielsweise mittels eines unter allen Routern verteilten symmetrischen Schlüssels und/oder mittels eines Hash-Salts, der bei Inbetriebnahme der Router definiert wird.

Auf diese Weise werden die übrigen Router veranlasst, bei zukünftigen P2P-Paketen zu prüfen, ob diese von einer gespeicherten Adresse stammen oder an eine solche Adresse gerichtet sind, und verzichten in diesem Fall auf Maßnahmen zum Unterbinden dieser Pakete. Die Pakete werden stattdessen ordnungsgemäß an das Zielgerät weitergeleitet. Auf diese Weise werden zulässige P2P-Pakete an ihre Empfänger geroutet, während unzulässige Pakete weiterhin gestört oder auf andere Weise an ihrer Zustellung gehindert werden.

Als Alternative zu der beschriebenen Benachrichtigung der anderen Router über eine zugelassene Absenderadresse oder zugeordnete Adresse kann der Router, über den die gesicherte P2P-Verbindung initialisiert wurde, die Adressen an einem zentralen Ort, beispielsweise einem Server in dem Netzwerk, speichern. In dieser Ausführungsform prüfen die Router in dem Netzwerk, ob ein P2P-Paket, das sie erhalten, eine Absender- oder Zieladresse enthält, die auf dem Server als zulässige Adresse gespeichert ist. Eine verteilte Speicherung der Adressen entfällt auf diese Weise. Als weitere Alternative werden die Adressen lediglich auf dem genannten Router gespeichert, und die übrigen Router fordern bei Erhalt eines P2P-Pakets Angaben von dem genannten Router hinsichtlich deren Zulässigkeit an.

Beim Speichern einer Adresse durch den Router beim Initialisieren einer gesicherten P2P-Verbindung kann dieser in einer Ausführungsform eine vorbestimmte Dauer festsetzen, für die die Zuordnung gilt. Diese Dauer kann benutzerdefiniert sein oder durch Erfahrungswerte bestimmt werden; beispielsweise kann der Router nach Errichten sicherer P2P-Verbindungen messen, wie lange diese genutzt werden, und kann aus den gemessenen Werten einen Mittelwert bilden, der als vorbestimmte Dauer verwendet wird. Der Beginn der Dauer kann in Form eines Zeitstempels gespeichert werden und wird wiederholt geprüft, bis die Dauer verstrichen ist.

Nach Ablauf der Dauer sendet der Router, der die Dauer festgesetzt hatte, erneut eine Nachricht an die übrigen Router, wiederum beispielsweise in Form eines erzeugten und insbesondere verschlüsselten Pakets. Zugleich wird die Adresse im Router gelöscht, beispielsweise durch Entfernen der Absenderadresse oder der zugeordneten Adresse aus einer Tabelle. Die Router empfangen die Benachrichtigung und passen ihre Adressen oder Zuordnungen in derselben Weise an. Alternativ kann auf die Benachrichtigung der Router verzichtet werden und lediglich die lokale Tabelle des Routers oder ein zentraler Server aktualisiert werden.

Trifft ein Paket der Verbindung bei einem der Router ein, nachdem die Adresse gelöscht wurde, wird das Paket wie gewohnt modifiziert oder nicht weitergeleitet. In Ausführungsformen, bei denen Adressen und Zeitstempel zentral in einem Server gespeichert werden, unterbleibt die Benachrichtigung der übrigen Router; diese erkennen aufgrund des fehlenden Eintrags in dem Server oder in dem initialisierenden Router , dass die Verbindung nicht zugelassen ist.

In bestimmten Ausführungsformen kann die Dauer der Verbindung automatisch verlängert werden. Beispielsweise kann ein Router, der ein Paket einer zugelassenen P2P-Verbindung erhält, den gespeicherten Zeitstempel durch einen aktuellen Zeitstempel ersetzen, so dass die Dauer erneut zu laufen beginnt. Zusätzlich können die übrigen Router über den neuen Zeitstempel benachrichtigt werden. Auf diese Weise kann eine P2P-Verbindung, die durchgehend benutzt wird, beliebig lange verwendet werden.

In einer Ausführungsform können Verbindungen auch ohne Speichern von Zeitstempeln verlängert werden. Eine Verbindung wird hierbei so lange aufrechterhalten (d.h., Adressen bleiben gespeichert), bis auf der Verbindung ein Paket mit der Anweisung eingeht, die Verbindung aufzuheben. Auf diese Weise ist für ein externes Gerät ein wiederholtes Senden von Paketen zum Aufrechterhalten der Verbindung nicht erforderlich.

Figur 1 zeigt ein Verfahren 100, das von Routern in einem Netzwerk ausgeführt wird, wenn keinerlei P2P-Verbindungen zugelassen sind. Das Verfahren wird vorzugsweise von jedem Router in dem Netzwerk ausgeführt, um unzulässige P2P-Verbindungen zu stören.

Ein Router empfängt in Schritt 110 ein Paket und prüft in Schritt 120, ob es sich um ein P2P-Paket handelt, beispielsweise anhand von Headerinformationen des Pakets. Ist dies nicht der Fall, wird das Paket in Schritt 130 ordnungsgemäß verarbeitet, nämlich entweder in ein anderes Netzwerksegment weitergeleitet, falls dies zum Erreichen des Empfängers erforderlich ist, oder aber ungestört in seinem aktuellen Segment belassen, falls sich der Empfänger dort befindet.

Handelt es sich jedoch um ein P2P-Paket, hindert der Router das Paket an seiner ordnungsgemäßen Verarbeitung. Zu diesem Zweck wird in Schritt 140 ermittelt, ob der Empfänger des Pakets in demselben Segment liegt, in dem das Paket empfangen wurde. Ist dies der Fall, wird das Paket in Schritt 160 modifiziert, so dass es für den Empfänger unlesbar und/oder unzustellbar wird. Andernfalls - das Paket müsste in ein Nachbarsegment weitergeleitet werden, um seinen Empfänger zu erreichen - unterbleibt ein Weiterleiten des Pakets an das Nachbarsegment durch den Router, so dass das Paket an seiner Zustellung gehindert wird.

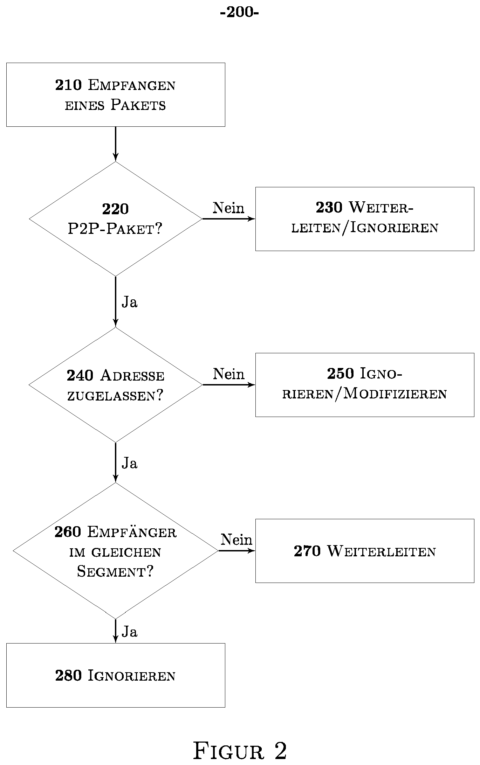

Figur 2 zeigt ein Verfahren 200, das von Routern ausgeführt wird und zwischen zulässigen und unzulässigen P2P-Verbindungen unterscheidet.

In Schritt 210 empfängt ein Router ein Paket und prüft in Schritt 220, ob es sich um ein P2P-Paket handelt. Hierzu kann beispielsweise eine Headerinformation des Pakets gelesen werden, insbesondere eine Adressierung des Pakets. Handelt es sich nicht um ein P2P-Paket, wird das Paket in Schritt 230 ordnungsgemäß in ein nächstes Segment weitergeleitet, falls dies zum Routing des Pakets erforderlich ist, oder wird nicht weiter betrachtet, falls eine Weiterleitung in ein anderes Segment nicht erforderlich ist. Dieses Vorgehen wird analog zu Schritt 130 des Verfahrens 100 ausgeführt.

Ist das Paket ein P2P-Paket, prüft der Router in Schritt 240, ob die P2P-Verbindung, die das Paket nutzt, zugelassen wurde. Zu diesem Zweck prüft der Router, ob eine Absenderadresse des Pakets mit einer lokal durch den Router gespeicherten Adresse übereinstimmt. Beispielsweise kann der Router über eine lokale Datenstruktur verfügen, in der zugelassene Absenderadressen gespeichert sind. Alternativ kann der Router Anfragen über die Adresse an nächstliegende oder auch sämtliche Router senden. Als weitere Alternative kann der Router einen vorbestimmten Server kontaktieren, der zugelassene Absenderadressen speichert. Der Router kann zusätzlich zu der Absenderadresse die Zieladresse prüfen, und das Paket nur dann als zulässig bearbeiten, wenn die Kombination aus Absenderadresse und Zieladresse des Pakets gespeichert ist.

Wenn die Adresse oder Adressen des Pakets nicht identifiziert werden können, hindert der Router das Paket in Schritt 250 an seiner weiteren Zustellung, beispielsweise durch Unterlassen einer Weiterleitung in ein nächstes Netzwerksegment oder durch Modifizieren des Pakets. Dieses Vorgehen ist analog zu den Schritten 150 und 160 des Verfahrens 100.

Wurde das Paket in Schritt 240 jedoch als zulässig erkannt, wird in Schritt 260 weiter geprüft, ob eine Weiterleitung in ein Nachbarsegment erforderlich ist. Das Paket wird in Schritt 270 gegebenenfalls weitergeleitet, oder gemäß Schritt 280 nicht weiter betrachtet.

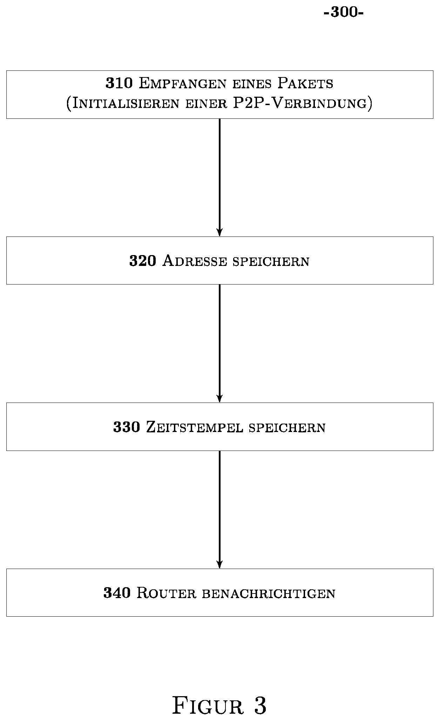

Figur 3 zeigt ein Verfahren 300 zur Ausführung durch einen Router, der eingerichtet ist, gesicherte P2P-Verbindungen entgegenzunehmen. Der Router kann zusätzlich über die in den Verfahren 100 und 200 erläuterte Funktionalität verfügen.

In Schritt 310 empfängt der Router auf einer gesicherten Verbindung ein Paket zur Einrichtung einer gesicherten P2P-Verbindung. Derartige Verbindungen werden als zulässig betrachtet. Der Router verfügt über eine Schnittstelle, die zur Annahme gesicherter P2P-Verbindungen eingerichtet ist. In einer bestimmten Ausführungsform ordnet der Router der Verbindung in Schritt 320 eine netzwerkweit eindeutige Adresse zu und speichert diese lokal und/oder auf einem Server. Anstelle einer zugeordneten Adresse kann auch einfach die Absenderadresse gespeichert werden. In allen Ausführungsformen kann zusätzlich die Zieladresse gespeichert werden. In einer Ausführungsform speichert der Router in Schritt 330 auch einen aktuellen Zeitstempel, der den Beginn einer Dauer markiert, für die Pakete der Verbindung mindestens zugelassen werden sollen. Der Zeitstempel kann beispielsweise gemeinsam mit der Absenderadresse beziehungsweise zugeordneten Adresse, gegebenenfalls auch mit der Zieladresse, lokal oder auf einem Server gespeichert werden.

In Schritt 340 benachrichtigt der Router andere Router über die Absenderadresse oder zugeordnete Adresse und optional über die Zieladresse und/oder den Zeitstempel. Die Benachrichtigung entfällt in Ausführungsformen, die einmaliges Speichern in dem Router oder einem Server vorsehen. Wird die Benachrichtigung durchgeführt, kann der Router entweder sämtliche Router in dem Netzwerk oder lediglich eine Teilmenge derselben benachrichtigen, beispielsweise mittels Broadcasting. In einer Ausführungsform kann der Router lediglich die nächstgelegenen Router verständigen oder aber lediglich solche Router, die auf dem Weg zu einer Zieladresse der Verbindung passiert werden. Die anderen Router speichern die übermittelte Information lokal oder greifen bei Bedarf (Schritt 240 in Verfahren 200) auf Serverinformationen zu.

Nach Ablauf der Dauer entfernt der Router die Absenderadresse beziehungsweise zugeordnete Adresse, gegebenenfalls auch Zieladresse und/oder Zeitstempel, aus seinem Speicher beziehungsweise dem Server. In Ausführungsformen mit lokaler Speicherung informiert ein Router, der den Ablauf der Dauer feststellt, die übrigen Router, die den entsprechenden Eintrag jeweils lokal entfernen.

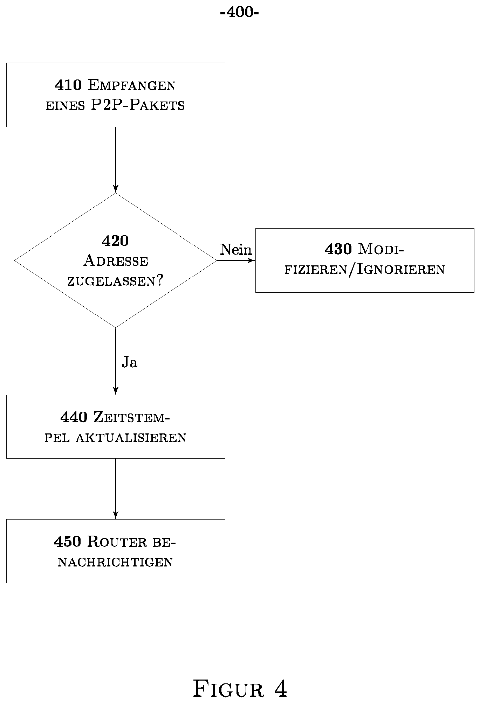

Figur 4 zeigt ein Verfahren 400 zur Verlängerung einer Dauer einer bereits zugelassenen P2P-Verbindung. Das Verfahren 400 kann durch jeden der bereits erwähnten Router durchgeführt werden.

In Schritt 410 empfängt der Router ein P2P-Paket und prüft in Schritt 420, ob das P2P-Paket eine bereits zugelassene Verbindung verwendet, beispielsweise durch die in Schritt 240 des Verfahrens 200 gegebenen Schritte. Analog zu den Schritten 150 und 160 des Verfahrens 100 oder Schritt 250 des Verfahrens 200 modifiziert der Router das Paket oder verhindert dessen Weiterleitung, falls die Verbindung nicht zugelassen ist.

Handelt es sich um ein zulässiges P2P-Paket, erzeugt der Router in Schritt 440 einen neuen Zeitstempel und ersetzt den zuvor gespeicherten Zeitstempel. Optional kann der Router in Schritt 450 andere Router über diese Aktualisierung informieren; jedoch ist dies nur in solchen Ausführungsformen vorgesehen, in denen Adressen und Zeitstempel lokal in dem oder den Routern gespeichert werden, und ist nicht erforderlich, wenn diese Speicherungen in einem Server vorgenommen werden.

Da bei Ablauf der gesetzten Dauer die entsprechenden Einträge entfernt werden - entweder lokal aus den Routern oder zentral aus einem Server - werden weitere Pakete einer zuvor als zulässig gespeicherten Verbindung wieder gemäß den Verfahren 100 oder 200 behandelt und somit als unzulässig erkannt und modifiziert oder nicht weitergeleitet.

Figur 5 zeigt ein beispielhaftes Netzwerk 500, dass sich zur Durchführung der Verfahren 100 bis 400 eignet. Das Netzwerk 500 ist ein hierarchisch organisiertes Netzwerk mit drei Routern 510a-c als Knoten eines Baumes und Geräten 520a-i als dessen Blattknoten. Jedoch ist die Erfindung nicht auf diese Topologie beschränkt und kann auch in alternativen Topologien implementiert werden.

Das gezeigte Netzwerk 500 ist in drei Adresssegmente unterteilt. Ein erstes Segment enthält einen beispielhaften Adressraum 1.0.x, der hier den Router 510a mit Adresse 1.0.0 sowie die Geräte 520a-c mit den Adressen 1.0.8, 1.0.100 und 1.0.104 umfasst. Ein zweites Segment enthält den Adressraum 1.1.x, der den Router 510b mit Adresse 1.1.0 sowie die Geräte 520d, 520e, 520h mit den Adressen 1.1.10, 1.1.13 und 1.1.12 umfasst. Ein drittes Segment umfasst den Adressraum 1.2.x, der hier den Router 510c mit Adresse 1.2.0 sowie Geräte 520f, 520g, 520i mit den Adressen 1.2.9, 1.2.21 und 1.2.33 umfasst. Die Router 510b und 510c sind jeweils mit zwei benachbarten Segmenten verbunden.

Wie bereits erläutert, können Router, die eine externe P2P-Verbindung aufbauen, je nach Ausführungsform eine Absenderadresse der P2P-Verbindung speichern oder aber der P2P-Verbindung eine in dem Netzwerk gültige Adresse zuordnen und speichern. In Ausführungsformen mit solchen zugeordneten Adressen verfügt jeder der Router 510a-c verfügt über eine oder mehrere zusätzliche Adressen, die er einer gesicherten P2P-Verbindung, insbesondere dem Absender einer solchen Verbindung, zuordnen kann. Diese Adressen sind netzwerkweit eindeutig. Insbesondere kann aus diesen Adressen abgelesen werden, in welchem Segment in dem Netzwerk sich der Router befindet, über den die P2P-Verbindung initialisiert wurde und an den Antwortpakete auf dieser Verbindung geroutet werden sollen. Beispielsweise werden Pakete, die von einem Gerät in dem Netzwerk an die Adresse 1.0.1 oder 1.0.2 gesendet werden, an das Netzwerksegment 1.0.x, und damit an den Router 1.0.0, gesendet. Die ersten beiden Stellen der Adressen geben somit das Segment des betreffenden Routers an.

Die Menge der zusätzlichen Adressen, über die ein Router verfügt, ist disjunkt von den Adressmengen, über die die anderen Router verfügen, so dass es nicht zu einer Mehrfachvergabe kommen kann. Diese Disjunktion folgt bereits daraus, dass die Segmente durch unterschiedliche Adressbereiche (1.o.x, 1.1.x, etc.) voneinander unterschieden werden können.

Versucht eines der Geräte, beispielsweise das Gerät 520b, eine P2P-Verbindung zu einem anderen Gerät im Netzwerk, beispielsweise dem Gerät 520a, aufzubauen, so werden Pakete zum Aufbau dieser Verbindung durch einen der Router 510a-c - sämtliche dieser drei Router erkennen Pakete in dem betroffenen Segment 1.0.x - geprüft und, da die Pakete keiner zugelassenen Verbindung angehören, modifiziert, so dass sie ihren Empfänger nicht erreichen können oder unlesbar werden. Das beschriebene Vorgehen folgt somit dem Verfahren 100, das durch einen der Router 510a-c ausgeführt wird mit den Schritten 110, 120, 140, 160, oder dem Verfahren 200 mit der Schrittfolge 210, 220, 240, 250. Das Verfahren 300 zur Zulassung einer P2P-Verbindung kann hingegen nicht ohne weiteres durch das Gerät 520a ausgeführt werden; hierzu müsste das Gerät 520a zunächst eine gesicherte P2P-Verbindung zu einem der Router 510a-c aufbauen, da lediglich diese eingerichtet sind, über ihre Schnittstelle derartige Verbindungen zuzulassen. Der Aufbau einer direkten P2P-Verbindung von Gerät 520a zu Gerät 520b würde jedoch scheitern, da entsprechende Pakete durch die genannten Router an ihrer Zustellung gehindert werden würden.

In einer Ausführungsform sendet ein externes Gerät Pakete zum Aufbau einer sicheren P2P-Verbindung an einen der Router 510a-c, und der Router ordnet der Absenderadresse des Geräts eine zusätzliche Adresse zu. Beispielsweise kann der Router 510a eine zusätzliche Adresse 1.0.1 oder 1.0.2 etc. zuordnen. Eine solche Adresse wird je Verbindung und Absender nur einmal vergeben. In der Folge verständigt der Router entweder sämtliche weiteren Router 510b und 510c oder lediglich diejenigen Router, die eingerichtet sind, Pakete der Verbindung auf ihrem Weg zu einem Zielgerät Pakete zu erkennen. In der gezeigten Konstellation müssen in diesem Fall beide Router 510b und 510c benachrichtigt werden, da diese sämtliche Pakete sehen, die im Segment 1.0.x erscheinen; dies gilt vorliegend für sämtliche Pakete, die an eines der Geräte 520a-i adressiert sind. Allerdings bräuchte ein Router, der unterhalb des Routers 510b in Segment 1.1.x liegt, nicht benachrichtigt zu werden, wenn die Verbindung auf eines der Geräte 520f, g oder i in dem Segment 1.2.x adressiert ist. Die Zuordnung der Adressen und weiterer Angaben (Zeitstempel) folgt somit dem Verfahren 300. Die Dauer der Verbindung kann mittels des Verfahrens 400 verlängert werden.

Somit liefert die Erfindung einen Mechanismus, um ein Netzwerk gegen unzulässige P2P-Verbindungen abzusichern und gleichzeitig bestimmte Verbindungen zuzulassen. Die Erfindung ist besonders effizient, da sie mit minimalem Aufwand Verbindungen zulässt, Pakete solcher Verbindungen anhand eines Bezeichners (zusätzliche Adresse) identifiziert und sie in bestimmten Ausführungsformen automatisch wieder abschaltet.

## Patentansprüche

1. System, umfassend:
ein oder mehrere Geräte, die miteinander in einem Netzwerk gekoppelt sind; und
einen oder mehrere Router, die eingerichtet sind, Pakete an die Geräte weiterzuleiten;
wobei wenigstens einer der Router eingerichtet ist, eine gesicherte Verbindung von einem externen Gerät anzunehmen und eine Adresse des Geräts als zulässige Adresse zu speichern; und
wobei der Router ferner eingerichtet ist, bei Erhalt eines Pakets zur Errichtung einer Peer-to-Peer, P2P, -Verbindung zu prüfen, ob das Paket von einer zulässigen Adresse stammt, und in diesem Fall weitere Router in dem Netzwerk von der zulässigen Adresse zu unterrichten und das Paket in dem Netzwerk weiterzuleiten, und andernfalls das Paket an der Weiterleitung zu hindern;
**dadurch gekennzeichnet, dass**
das Hindern eines Pakets an der Weiterleitung umfasst, das Paket zu modifizieren, wobei das Modifizieren umfasst, den Paketinhalt unlesbar zu machen oder zu scramblen und eine kurzzeitige Störung des Verbindungsmediums hervorzurufen.

2. System nach Anspruch 1, wobei der Router ferner eingerichtet ist, nach dem Annehmen der gesicherten Verbindung dem externen Gerät eine eindeutige Adresse zuzuordnen, und wobei das Speichern einer Adresse des Geräts umfasst, die eindeutige Adresse als zulässige Adresse zu speichern.

3. System nach Anspruch 1 oder 2, wobei wenigstens einer der weiteren Router eingerichtet ist, bei Erhalt eines Pakets, das eine bestehende P2P-Verbindung verwendet, zu prüfen, ob das Paket von einer zulässigen Adresse stammt und das Paket in diesem Fall in dem Netzwerk weiterzuleiten und das Paket andernfalls an der Weiterleitung zu hindern.

4. System nach Anspruch einem der vorstehenden Ansprüche, wobei das Netzwerk in Segmenten mit unterschiedlichen Adressbereichen organisiert ist, und wobei der wenigstens eine Router eingerichtet ist, nur diejenigen Router über die zulässige Adresse zu verständigen, die der Weiterleitung von Paketen in Segmente dienen, die ein Zielgerät der gesicherten Verbindung enthalten.

5. System nach einem der Ansprüche 1 bis 3, wobei der wenigstens eine Router eingerichtet ist, sämtliche Geräte und/oder Router in dem Netzwerk über die zulässige Adresse zu verständigen.

6. System nach einem der vorstehenden Ansprüche, wobei der Router ferner eingerichtet ist, eine zulässige Adresse nach einer vorgegebenen Dauer aufzuheben, insbesondere wobei die Dauer mit dem Speichern der Adresse beginnt.

7. System nach einem der vorstehenden Ansprüche, wobei der Router ferner eingerichtet ist, bei Erhalt eines Pakets, das eine bestehende P2P-Verbindung verwendet, zu prüfen, ob das Paket von einer zulässigen Adresse stammt und das Paket in diesem Fall in dem Netzwerk weiterzuleiten und das Paket andernfalls an der Weiterleitung zu hindern.

8. System nach Anspruch 6, wobei die Dauer erneut beginnt, wenn das Paket von einer zulässigen Adresse stammt.

9. System nach einem der vorstehenden Ansprüche, wobei die gesicherte Verbindung über eine vorbestimmte Schnittstelle des Routers und/oder über eine Transport Layer Security, TLS, -Verbindung und/oder KNX/IP-Secure-Verbindung erfolgt.

10. Verfahren, umfassend:
Annehmen einer gesicherten Verbindung von einem externen Gerät durch einen Router in einem Netzwerk, und Speichern einer Adresse des Geräts durch den Router als zulässige Adresse; und
bei Erhalt eines Pakets zur Errichtung einer Peer-to-Peer, P2P, -Verbindung Prüfen durch den Router, ob das Paket von einer zulässigen Adresse stammt,
und in diesem Fall Unterrichten weiterer Router in dem Netzwerk von der zulässigen Adresse sowie Weiterleiten des Pakets in dem Netzwerk durch den Router, und andernfalls Hindern des Pakets an dessen Weiterleitung, **dadurch gekennzeichnet, dass** das Hindern eines Pakets an der Weiterleitung umfasst, das Paket zu modifizieren,
wobei das Modifizieren umfasst, den Paketinhalt unlesbar zu machen oder zu scramblen und eine kurzzeitige Störung des Verbindungsmediums hervorzurufen.

11. Verfahren nach Anspruch 10, ferner umfassend: nach dem Annehmen der gesicherten Verbindung Zuordnen einer eindeutigen Adresse zu dem externen Gerät, wobei das Speichern einer Adresse des Geräts umfasst, die eindeutige Adresse als zulässige Adresse zu speichern.

12. Verfahren nach Anspruch 10 oder 11, ferner umfassend Prüfen, ob das Paket von einer zulässigen Adresse stammt, und in diesem Fall Weiterleiten des Pakets in dem Netzwerk und andernfalls Hindern des Pakets an dessen Weiterleitung.

13. Vorrichtung zur Verwendung als Router in einem Netzwerk,
wobei die Vorrichtung eingerichtet ist, eine gesicherte Verbindung von einem externen Gerät anzunehmen und eine Adresse des Geräts als zulässige Adresse zu speichern; und
wobei die Vorrichtung ferner eingerichtet ist, bei Erhalt eines Pakets zur Errichtung einer Peer-to-Peer, P2P, -Verbindung zu prüfen, ob das Paket von einer zulässigen Adresse stammt, und in diesem Fall weitere Router in dem Netzwerk von der zugeordneten Adresse zu unterrichten und das Paket in dem Netzwerk weiterzuleiten, und andernfalls das Paket an der Weiterleitung zu hindern, **dadurch gekennzeichnet, dass** das Hindern eines Pakets an der Weiterleitung umfasst, das Paket zu modifizieren, wobei das Modifizieren umfasst, den Paketinhalt zu entwerten und/oder eine kurzzeitige Störung des Verbindungsmediums hervorzurufen.

14. Computerlesbares Medium mit darauf gespeicherten Befehlen, die, wenn sie durch einen Prozessor ausgeführt werden, das Verfahren nach einem der Ansprüche 10 bis 12 durchführen.

## Claims

1. A system comprising:
one or more devices coupled to each other in a network; and
one or more routers configured to forward packets to the devices;
wherein at least one of the routers is configured to accept a secured connection from an external device and store an address of the device as an allowable address; and
wherein the router is further configured to check, upon receipt of a packet to establish a peer-to-peer, P2P, connection, whether the packet originates from an allowable address, and in this case inform further routers in the network of the allowable address and forward the packet in the network, and otherwise prevent the packet from being forwarded; **characterized in that** preventing a packet from being forwarded comprises modifying the packet, wherein the modifying comprises making the packet content unreadable or scrambling and causing a short-term disruption of the connection medium.

2. The system of claim 1, wherein the router is further configured to assign a unique address to the external device after accepting the secured connection, and wherein storing an address of the device comprises storing the unique address as an allowable address.

3. The system of claim 1 or 2, wherein at least one of the further routers is configured to check, upon receipt of a packet using an existing P2P connection, whether the packet originates from an allowable address, and in this case forward the packet in the network, and otherwise prevent the packet from being forwarded.

4. The system of any one of the preceding claims, wherein the network is organized into segments with different address ranges, and wherein the at least one router is configured to communicate only those routers via the allowable address that serve to forward packets into segments containing a destination device of the secured connection.

5. The system of any one of claims 1 to 3, wherein the at least one router is configured to communicate all devices and/or routers in the network via the allowable address.

6. The system of any one of the preceding claims, wherein the router is further configured to cancel an allowable address after a predetermined duration, in particular wherein the duration starts with storing the address.

7. The system of any one of the preceding claims, wherein the router is further configured to check, upon receipt of a packet using an existing P2P connection, whether the packet originates from an allowable address, and in this case forward the packet in the network, and otherwise prevent the packet from being forwarded.

8. The system of claim 6, wherein the duration starts again when the packet originates from an allowable address.

9. The system of any one of the preceding claims, wherein the secured connection is via a predetermined interface of the router and/or via a Transport Layer Security, TLS, connection and/or KNX/IP Secure connection.

10. A method comprising:
accepting, by a router in a network, a secured connection from an external device, and storing, by the router, an address of the device as an allowable address; and
checking, by the router, upon receipt of a packet to establish a peer-to-peer, P2P, connection, whether the packet originates from an allowable address, and in this case informing further routers in the network of the allowable address and forwarding the packet in the network by the router, and otherwise preventing the packet from being forwarded, **characterized in that** preventing a packet from being forwarded comprises modifying the packet, wherein the modifying comprises making the packet content unreadable or scrambling and causing a short-term disruption of the connection medium.

11. The method of claim 10, further comprising: assigning a unique address to the external device after accepting the secured connection, wherein storing an address of the device comprises storing the unique address as an allowable address.

12. The method of claim 10 or 11, further comprising checking whether the packet originates from an allowable address, and in this case forwarding the packet in the network, and otherwise preventing the packet from being forwarded.

13. An apparatus for use as a router in a network,
wherein the apparatus is configured to accept a secured connection from an external device and store an address of the device as an allowable address; and
wherein the apparatus is further configured to check, upon receipt of a packet to establish a peer-to-peer, P2P, connection, whether the packet originates from an allowable address, and in this case inform further routers in the network of the allowable address and forward the packet in the network, and otherwise prevent the packet from being forwarded, **characterized in that** preventing a packet from being forwarded comprises modifying the packet, wherein the modifying comprises devaluing the packet content and/or causing a short-term disruption of the connection medium.

14. A computer-readable medium having stored thereon instructions which, when executed by a processor, perform the method of any one of claims 10 to 12.

## Revendications

1. Système, comprenant :
un ou plusieurs dispositifs couplés entre eux dans un réseau ;
et
un ou plusieurs routeurs configurés pour acheminer des paquets vers les dispositifs ;
dans lequel au moins l'un des routeurs est configuré pour accepter une connexion sécurisée provenant d'un dispositif externe et pour stocker une adresse du dispositif comme adresse autorisée ; et
dans lequel le routeur est en outre configuré, lors de la réception d'un paquet visant à établir une connexion pair-à-pair (P2P), pour vérifier si le paquet provient d'une adresse autorisée, et dans ce cas, pour informer d'autres routeurs du réseau de l'adresse autorisée et pour acheminer le paquet dans le réseau, et sinon, pour empêcher l'acheminement du paquet ;
**caractérisé en ce que**
l'empêchement de l'acheminement d'un paquet comprend la modification du paquet, la modification comprenant le fait de rendre le contenu du paquet illisible ou de le brouiller et/ou de provoquer une perturbation momentanée du support de connexion.

2. Système selon la revendication 1, dans lequel le routeur est en outre configuré, après avoir accepté la connexion sécurisée, pour attribuer une adresse unique au dispositif externe, et dans lequel le stockage d'une adresse du dispositif comprend le stockage de l'adresse unique comme adresse autorisée.

3. Système selon la revendication 1 ou 2, dans lequel au moins l'un des autres routeurs est configuré, lors de la réception d'un paquet utilisant une connexion P2P existante, pour vérifier si le paquet provient d'une adresse autorisée et, dans ce cas, pour acheminer le paquet dans le réseau et, sinon, pour empêcher l'acheminement du paquet.

4. Système selon l'une des revendications précédentes, dans lequel le réseau est organisé en segments avec différentes plages d'adresses, et dans lequel l'au moins un routeur est configuré pour informer uniquement les routeurs qui servent à l'acheminement de paquets dans les segments contenant un dispositif de destination de la connexion sécurisée de l'adresse autorisée.

5. Système selon l'une des revendications 1 à 3, dans lequel l'au moins un routeur est configuré pour informer tous les dispositifs et/ou routeurs du réseau de l'adresse autorisée.

6. Système selon l'une des revendications précédentes, dans lequel le routeur est en outre configuré pour supprimer une adresse autorisée après une durée prédéterminée, en particulier dans lequel la durée commence avec l'enregistrement de l'adresse.

7. Système selon l'une des revendications précédentes, dans lequel le routeur est en outre configuré, lors de la réception d'un paquet utilisant une connexion P2P existante, pour vérifier si le paquet provient d'une adresse autorisée et, dans ce cas, pour acheminer le paquet dans le réseau et, sinon, pour empêcher l'acheminement du paquet.

8. Système selon la revendication 6, dans lequel la durée recommence lorsque le paquet provient d'une adresse autorisée.

9. Système selon l'une des revendications précédentes, dans lequel la connexion sécurisée s'effectue via une interface prédéterminée du routeur et/ou via une connexion Transport Layer Security (TLS) et/ou une connexion KNX/IP Secure.

10. Procédé, comprenant :
l'acceptation d'une connexion sécurisée provenant d'un dispositif externe par un routeur dans un réseau, et le stockage d'une adresse du dispositif par le routeur comme adresse autorisée ; et
lors de la réception d'un paquet visant à établir une connexion pair-à-pair (P2P), la vérification par le routeur si le paquet provient d'une adresse autorisée, et dans ce cas, l'information d'autres routeurs du réseau de l'adresse autorisée ainsi que l'acheminement du paquet dans le réseau par le routeur, et sinon, l'empêchement de l'acheminement du paquet, **caractérisé en ce que** l'empêchement de l'acheminement d'un paquet comprend la modification du paquet, la modification comprenant le fait de rendre le contenu du paquet illisible ou de le brouiller et/ou de provoquer une perturbation momentanée du support de connexion.

11. Procédé selon la revendication 10, comprenant en outre : après l'acceptation de la connexion sécurisée, l'attribution d'une adresse unique au dispositif externe, dans lequel le stockage d'une adresse du dispositif comprend le stockage de l'adresse unique comme adresse autorisée.

12. Procédé selon la revendication 10 ou 11, comprenant en outre la vérification si le paquet provient d'une adresse autorisée, et dans ce cas, l'acheminement du paquet dans le réseau et sinon, l'empêchement de l'acheminement du paquet.

13. Dispositif destiné à être utilisé comme routeur dans un réseau,
dans lequel le dispositif est configuré pour accepter une connexion sécurisée provenant d'un dispositif externe et pour stocker une adresse du dispositif comme adresse autorisée ; et
dans lequel le dispositif est en outre configuré, lors de la réception d'un paquet visant à établir une connexion pair-à-pair (P2P), pour vérifier si le paquet provient d'une adresse autorisée, et dans ce cas, pour informer d'autres routeurs du réseau de l'adresse attribuée et pour acheminer le paquet dans le réseau, et sinon, pour empêcher l'acheminement du paquet, **caractérisé en ce que** l'empêchement de l'acheminement d'un paquet comprend la modification du paquet, la modification comprenant le fait de rendre le contenu du paquet illisible ou de le brouiller et/ou de provoquer une perturbation momentanée du support de connexion.

14. Support lisible par ordinateur contenant des instructions qui, lorsqu'elles sont exécutées par un processeur, mettent en œuvre le procédé selon l'une des revendications 10 à 12.
